# EUROPÄISCHE PATENTSCHRIFT

(11) **EP 2 341 807 B1**
(45) Veröffentlichungstag und Bekanntmachung des Hinweises auf die Patenterteilung: **09.01.2013**
(21) Anmeldenummer: 09760093.6
(22) Anmeldetag: 03.11.2009
(51) Int. Cl.: A47J 43/27, B01F 11/00, B01F 13/00

(54) **TRINKBEHÄLTER**
BEVERAGE CONTAINER
CONTENEUR DE BOISSON

(30) Priorität: 04.11.2008 DE 102008055787
(43) Veröffentlichungstag der Anmeldung: 13.07.2011
(73) Patentinhaber: Enghard, Florian, 65843 Sulzbach (DE)
(72) Erfinder: Enghard, Florian, 65843 Sulzbach (DE)
(74) Vertreter: Behrens, Helmut
(86) Internationale Anmeldenummer: PCT/EP2009/007861
(87) Internationale Veröffentlichungsnummer: WO 2010/051965

(56) Entgegenhaltungen:
- US-A- 395 303
- US-A- 1 060 419
- US-A- 2 776 120
- US-A- 2 793 012
- US-A- 3 136 532

## Beschreibung

Die Erfindung betrifft einen Trinkbehälter gemäss dem Oberbegriff des Patentanspruchs 1.

Es gibt derzeit zahlreiche Shaker, Mixbecher und Flaschen, die für das Vermischen von verschiedenen Ingredienzien vorgesehen sind. Diese Ingredienzien sind meist Pulver und Flüssigkeit. Diese Shaker oder Mixbecher sollen das Vermischen dieser Ingredienzien ermöglichen bzw. verbessern. Man füllt dazu die zu vermischenden Substanzen in den Mischbehälter ein und verschließt diesen mit einem Deckelelement. Durch eine vorzugsweise mit der Hand ausgeführte Shakebewegung werden die Substanzen im Mischbehälter miteinander vermischt.

Um eine bessere Vermischung zu ermöglichen, werden diese Mixbecher/Shaker mit verschiedenen Hilfselementen oder/und mit einem speziellen Formdesign angeboten.

Es sind derzeit verschiedene dieser Vorrichtungen bekannt. Ein gängiges Modell ist der Shaker mit einsetzbarem Schlagsieb. Dieses Sieb wird vorzugsweise vor dem Vermischen nach Befüllung des Mischbehälters mit den zu vermischenden Substanzen an der Behälteröffnung fixiert oder eingesetzt. Danach wird der Mischbehälter mit dem Deckelelement verschlossenen. Danach werden die eingefüllten Substanzen, meist Flüssigkeit und Pulver, durch die Shakebewegung durch das Sieb bewegt. So findet eine verbesserte Vermischung statt. Diese einsetzbaren Siebelemente sind meist gitter- oder turbinenförmig ausgerichtet.

Weitere Vorrichtungen zur Verbesserung des Mischvorgangs sind speziell geformte, geschwungene Innenwände im Mischbehälter. Diese speziellen Wände sind vorzugsweise am Innenbereich des Deckelelements oder am Boden des Becherelements angebracht. Diese besagten Wände verursachen beim Shakevorgang einen bestimmten Verlauf der Substanzen. Durch die entstehende strudelartige Bewegung der Substanzen ergibt sich eine verbesserte Vermischung von Flüssigkeit und Pulver oder Flüssigkeit und Flüssigkeit.

Eine andere Vorrichtung ist aus dem US-Patent 6,379,032 bekannt. Ein frei beweglicher, nicht fixierter, gitterförmig angefertigter Metallball (sogenannter "Blenderball") optimiert die Vermischung der eingefüllten Substanzen, indem er im Innenbereich während der Shakebewegung durch den Innenraum des Mischbehälters wandert. Durch seine kleinere Form und sein Eigengewicht bewegt er sich, auch wenn die zu vermischenden Substanzen (Flüssigkeit/Pulver) durch die Wandbegrenzung gestoppt werden, weiter im Innenraum des Mischbehälters in die Richtung der ausgeführten Shakebewegung und verbessert durch seinen gitterartigen, engmaschigen Körper die Vermischung der Substanzen. Die ausgeführte Produktionsvariante ist als "BlendeBottle" bekannt (www.blenderbottle.com).

Alle diese Vorrichtungen haben ihre Vorteile, aber auch Schwächen. Das Sieb zum Einsetzen ist zum Beispiel bei schlecht zu vermischenden Substanzen durch eine fehlende Eigenbewegung schnell verklebt. Allerdings garantiert das Sieb beim Vermischen zu Normalbedingungen durch seine sehr eng gesetzten Maschen ein optimales Mischverhältnis.

Der "Blenderball" aus dem US-Patent 6,379,032 leistet auch bei schlecht zu vermischenden Substanzen ein gutes Ergebnis und ein Verkleben ist durch seine Eigenbewegung im Mischbehälter vorgebeugt. Allerdings ist der "Blenderball" nicht so engmaschig wie ein Gittersieb und durch seine kleine Größe nicht so flächenabdeckend wie ein Sieb.

Die Erfindung legt deshalb die Aufgabe zugrunde, die Vorteile beider Vorrichtungen auf ein Element zu vereinen.

Weiterhin sind Behälter mit federförmigen Mischvorrichtungen aus den US-Patenten US 395.303, US 2,776,120, US 1,060,419, US 3,136,532, und US 2,793,012 bekannt. Z.B. offenbart US 395,303 A einen Trinkbehälter gemäß dem Oberbegriff des Anspruchs 1.

Diese Aufgabe wird durch die in Patentanspruch 1 angegebene Erfindung gelöst. Weitere vorteilhafte Ausführungsbeispiele der Erfindung sind in den Unteransprüchen angegeben.

Die Erfindung hat den Vorteil, dass durch die Beweglichkeit der spiralförmigen einsetzbaren Mischvorrichtung (Hilfselement) die Vermischung optimiert wird, indem sie durch die Bewegung im Innenraum während des Shakevorgangs ein Verkleben vermeidet, aber bei rückläufiger Bewegung wie ein Sieb wirkt.

Vorteilhaft ist bei der hier vorgeschlagenen Mischvorrichtung, dass die Spiralform im zum Becherboden ausgezogenen Zustand im Durchmesser kleiner wird und sich so optimal an die Form der gängigsten Shakermodelle anpasst und damit eine optimale Flächenabdeckung garantiert.

Hinzu kommt, dass die Mischvorrichtung bzw. die Spirale leicht zu reinigen und einzusetzen ist. Für dasselbe Mischergebnis müssten normalerweise 2 Hilfselemente (Sieb/Ball) eingesetzt und gereinigt werden.

Die Erfindung wird anhand eines Ausführungsbeispiels, das in Zeichnungen dargestellt ist, näher beschrieben. Es zeigen:
- Fig. 1:: eine spiralförmige Vorrichtung für die Verbesserung des Mischergebnisses mit Vorrichtung zum Fixieren;
- Fig. 1a:: eine spiralförmige Vorrichtung für die Verbesserung des Mischergebnisses mit Vorrichtung zum Einlegen;
- Fig. 1b:: verschiedene Ausführungen der Materialverdickung vorzugsweise mittig angeordnet (Teilfigur A: Kegel; Teilfigur B: Halbkugel; Teilfigur C: Sieb oder Gitter; Teilfigur D: Spinnenform);
- Fig. 2:: Becherelement/Behälter;
- Fig. 3:: Spiralbewegung während des Shakevorgangs Richtung Becherboden;
- Fig. 4.: Spiralbewegung/Zustand während Shakevorgang Richtung Deckelelement.

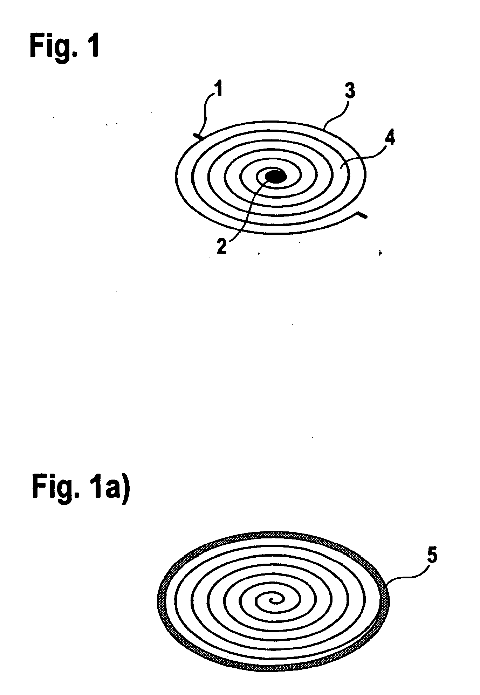

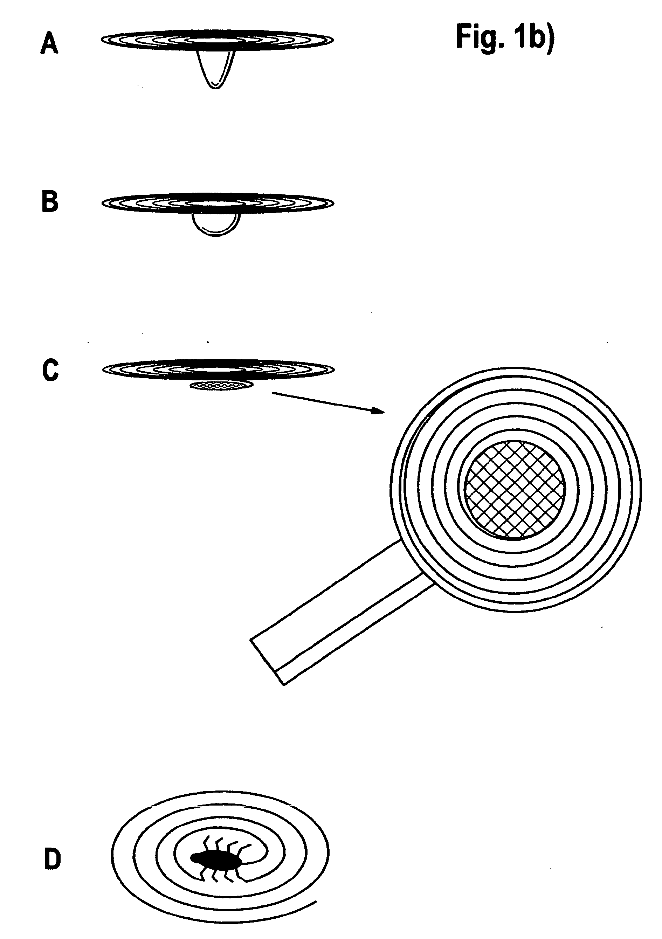

In Fig. 1 wird eine spiralförmige Vorrichtung (Spirale) 3 dargestellt, die mit Ihrer Fixiervorrichtung 1 vorzugsweise am Deckelelement oder an der Behälteröffnung 7 fixiert werden kann. Das kann vorzugsweise durch Einstecken erreicht werden. Durch die Spiralform entsteht ein siebartiges Gebilde, welches maschenähnliche Durchgänge 4 aufweist. Vorzugsweise in der Mitte angeordnet befindet sich eine Materialverdickung 2, um beim Shakevorgang die Eigenbewegung der Spirale in Richtung Becherboden zu verstärken.

Fig. 1a stellt die gleiche spiralförmige Vorrichtung 3 mit dem Unterschied dar, dass die Fixiervorrichtung 1 jetzt vorzugsweise als Kranz 5 zum Auflegung auf eine Vorrichtung im Becherelement ausgelegt ist. Ein weiterer Unterschied zum Modell aus Fig. 1 besteht darin, dass auf die Materialverdickung in der Mitte der Spirale verzichtet wird, aber mit einer Materialverdickung im gesamten Verlauf des Spiralarms oder durch eine spezielle Auswahl von einem schwereren Material derselbe Effekt der verstärkten Eigenbewegung erreicht wird.

In Fig. 1b sind verschiedene Modelle der Materialverdickung dargestellt. So zeigt die Teilfigur A eine pyramidenähnliche Materialverdickung, die nach unten gerichtet ist, um die Wassermassen im Shake selbst zu zerteilen.

In der Teilfigur B ist die Materialverdickung als Halbkugel ausgeformt, die auch nach unten gerichtet ist und denselben Effekt wie die Verdickung nach Teilfigur A hervorruft.

In der Teilfigur C hat die Materialverdickung die Form eines Siebes, um eine weitere Verbesserung im Mischverhältnis zu erzielen. Vorteilhaft ist bei dieser Ausbildung, dass es sich um ein bewegtes Sieb handelt, da es während des Shakevorgangs auf- und abfedert.

In Teilfigur D ist die spiralförmige Mischvorrichtung 3 spinnenförmig ausgebildet. Dies soll den optischen Effekt verbessern und wie eine Spinne im Netz wirken.

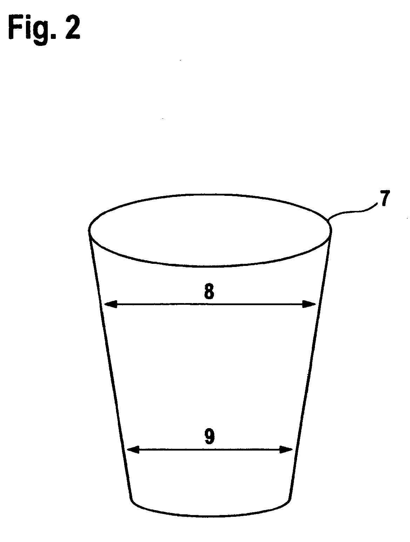

In Fig. 2 wird das Becherelement gezeigt, dass vorzugsweise die marktübliche Form behält. Durch die zum Boden hin kleiner werdenden Abstände der Becherseitenwände (8/9) passt sich die Form des Bechers an den zum Becherboden immer kleiner werdenden Verlauf der geschwungenen Spirale 3 an. Vorzugsweise wird das Deckelelement an der oberen Behälteröffnung 7 durch ein Gewinde oder eine Steckvorrichtung fixiert.

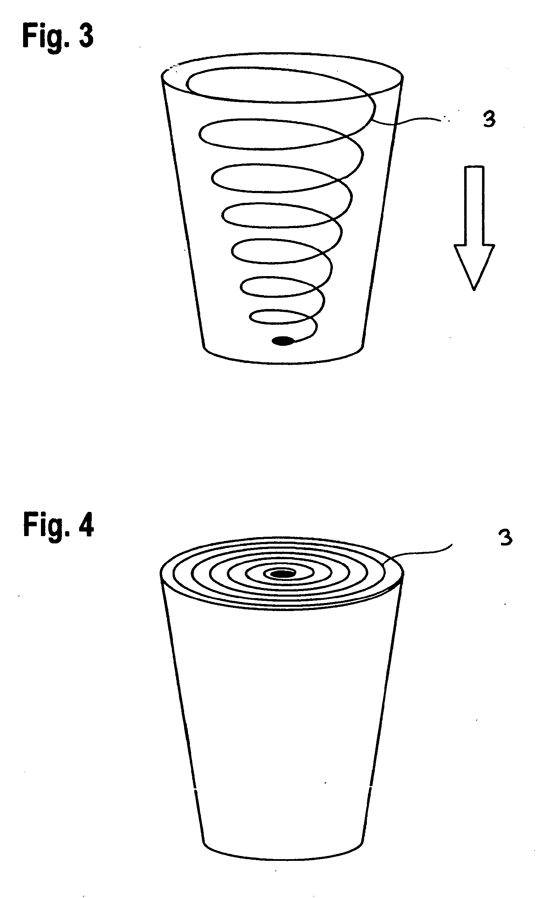

In Fig. 3 wird der Verlauf der spiralförmigen Vorrichtung 3 während des Shakevorgangs in Richtung Becherboden dargestellt. Durch die Spiralform und den dadurch im ausgezogenen Zustand immer enger werdenden Verlauf passt sich die Spirale 3 dem nach unten hin enger werdenden Verlauf des Behälters an.

In Fig. 4 wird der Verlauf der spiralförmigen Vorrichtung 3 während des Shakevorgangs in Richtung Deckelelement dargestellt. Die Spirale 3 hat nun eine Siebform, da sie nicht ausgezogen ist. Dies kann dadurch erreicht werden, dass das Deckelelement so angeordnet ist, dass nur ein kleiner Bewegungsspielraum zugelassen wird. Eine weitere Möglichkeit wäre, die Beschaffenheit der Spirale 3 so anzulegen ist, dass diese zum Becherboden einen größeren Bewegungsspielraum und zum Deckelelement einen kleineren Bewegungsspielraum hat.

## Patentansprüche

1. Trinkbehälter mit einem Innenraum zur Aufnahme einer Flüssigkeit mit einer vorzugsweise oberseitig angebrachten Behälteröffnung, in dem eine Mischvorrichtung angebracht ist, die aus einem bewegbaren Drahtelement besteht, **dadurch gekennzeichnet, dass** das Drahtelement als flache elastische Spirale (3) ausgebildet ist, die mit einem Ende am Trinkbehälter (7) oder dessen Verschlusselement angebracht ist, während das andere Ende der Spirale (3) frei im Behälterraum endet, wobei die Spirale (3) so ausgebildet ist, dass sie durch eine Behälterbewegung und ihr Eigengewicht im Behälterinnenraum frei schwingend mindestens in linearer Richtung bewegbar ist.

2. Trinkbehälter nach Anspruch 1, **dadurch gekennzeichnet, dass** die Spirale (3) eine mittig angeordnete Materialanhäufung als Gewichtselement aufweist.

3. Trinkbehälter nach Anspruch 2, **dadurch gekennzeichnet, dass** die Materialanhäufung kegelförmig angelegt ist.

4. Trinkbehälter nach Anspruch 2, **dadurch gekennzeichnet, dass** die Materialanhäufung spinnenförmig angeordnet ist.

5. Trinkbehälter nach Anspruch 2, **dadurch gekennzeichnet, dass** die Materialanhäufung gitter- oder siebförmig angelegt ist.

6. Trinkbehälter nach einem der vorhergehenden Ansprüche, **dadurch gekennzeichnet, dass** Fixierelemente (1, 5) für das Drahtelement an der Behälteröffnung oder im Verschlusselement vorgesehen sind.

7. Trinkbehälter nach einem der vorhergehenden Ansprüche, **dadurch gekennzeichnet, dass** der Behälter zum Behälterboden hin einen enger werdenden Verlauf nimmt.

8. Trinkbehälter nach einem der vorhergehenden Ansprüche, **dadurch gekennzeichnet**, das der Bewegungsspielraum der Spirale (3) zum Becherboden größer ist als zum Verschlusselement.

9. Trinkbehälter nach einem der vorhergehenden Ansprüche, **dadurch gekennzeichnet, dass** der Bewegungsspielraum der Spirale (3) durch ein flach verlaufendes Verschlusselement eingeschränkt ist.

10. Trinkbehälter nach einem der vorhergehenden Ansprüche, **dadurch gekennzeichnet, dass** die Spirale (3) aus einem elastischen Metall oder Kunststoff besteht.

## Claims

1. Beverage container with an interior space to receive a liquid with a container opening preferably attached on the upper side, in which a mixing device consisting of a movable wire element is installed, **characterised in that** the wire element is formed as a flat elastic spiral (3), which is attached at one end to the beverage container (7) or its closure element, whereas the other end of the spiral (3) terminates freely in the container space, wherein the spiral (3) is configured so that it is movable to swing freely at least in linear direction in the container interior space as a result of a container movement and its own weight.

2. Beverage container according to claim 1, **characterised in that** the spiral (3) has a centrally arranged mass of material as weight element.

3. Beverage container according to claim 2, **characterised in that** the mass of material is constructed in a conical shape.

4. Beverage container according to claim 2, **characterised in that** the mass of material is arranged in a spider shape.

5. Beverage container according to claim 2, **characterised in that** the mass of material is constructed in the form of a grid or sieve.

6. Beverage container according to one of the preceding claims, **characterised in that** fastening elements (1, 5) for the wire element are provided at the container opening or in the closure element.

7. Beverage container according to one of the preceding claims, **characterised in that** the container has a narrowing form towards the container base.

8. Beverage container according to one of the preceding claims, **characterised in that** the clearance for movement of the spiral (3) is greater towards the beaker base than towards the closing element.

9. Beverage container according to one of the preceding claims, **characterised in that** the clearance for movement of the spiral (3) is restricted by a flat closing element.

10. Beverage container according to one of the preceding claims, **characterised in that** the spiral (3) is made from an elastic metal or plastic material.

## Revendications

1. Récipient à boisson comprenant un espace intérieur pour recevoir un liquide ayant une ouverture de récipient agencée de préférence sur le côté supérieur, dans lequel est installé un dispositif de mélange qui est constitué par un élément en fil métallique mobile, **caractérisé en ce que** l'élément en fil métallique est réalisé sous la forme d'une spirale élastique plane (3) qui est installée avec une extrémité au niveau du récipient à boisson (7) ou de son élément de fermeture, tandis que l'autre extrémité de la spirale (3) aboutit librement dans l'espace intérieur du récipient, étant entendu que la spirale (3) est réalisée de telle sorte qu'elle peut être mise en mouvement en oscillation libre dans l'espace intérieur du récipient au moins dans une direction linéaire sous l'effet d'un mouvement du récipient et de son propre poids.

2. Récipient à boisson selon la revendication 1, **caractérisé en ce que** la spirale (3) présente une accumulation de matière agencée au centre en tant qu'élément de poids.

3. Récipient à boisson selon la revendication 2, **caractérisé en ce que** l'accumulation de matière est déposée en forme de cône.

4. Récipient à boisson selon la revendication 2, **caractérisé en ce que** l'accumulation de matière est agencée en forme d'araignée.

5. Récipient à boisson selon la revendication 2, **caractérisé en ce que** l'accumulation de matière est déposée en forme de grille ou de filtre.

6. Récipient à boisson selon l'une quelconque des revendications précédentes, **caractérisé en ce que** des éléments de fixation (1, 5) sont prévus pour l'élément en fil métallique au niveau de l'ouverture du récipient ou dans l'élément de fermeture.

7. Récipient à boisson selon l'une quelconque des revendications précédentes, **caractérisé en ce que** le récipient présente une forme se rétrécissant en direction du fond du récipient.

8. Récipient à boisson selon l'une quelconque des revendications précédentes, **caractérisé en ce que** la marge de mouvement de la spirale (3) est plus grande par rapport au fond du gobelet que par rapport à l'élément de fermeture.

9. Récipient à boisson selon l'une quelconque des revendications précédentes, **caractérisé en ce que** la marge de mouvement de la spirale est limitée par un élément de fermeture s'étendant dans une forme plane.

10. Récipient à boisson selon l'une quelconque des revendications précédentes, **caractérisé en ce que** la spirale (3) est réalisée dans une matière plastique ou un métal élastique.
